Europäisches Patentamt

European Patent Office

Office européen des brevets

(19)

(11) Numéro de publication: **0 103 511**
A1

(12) **DEMANDE DE BREVET EUROPEEN**

(21) Numéro de dépôt: 83401734.5

(22) Date de dépôt: 01.09.83

(51) Int. Cl.³: **C 03 C 17/23**, C 04 B 41/06,
C 23 C 17/00

(30) Priorité: 08.09.82 JP 156406/82

(43) Date de publication de la demande: 21.03.84
Bulletin 84/12

(84) Etats contractants désignés: **BE DE FR GB IT LU NL SE**

(71) Demandeur: **SAINT-GOBAIN VITRAGE, Les
Miroirs 18, avenue d'Alsace, F-92400 Courbevoie (FR)**

(72) Inventeur: **Kawahara, Hideo, 8-3-205 Minami
Sakurazuka 2-chome, Toyonaka-shi Osaka-shi Osaka-fu
(JP)**
Inventeur: **Kato, Yukihiro, 2, 1-403 Nigawa-cho,
Nishinomiya-shi Hyogo-ken (JP)**

(74) Mandataire: **Breton, Jean-Claude et al, SAINT-GOBAIN
RECHERCHE 39, quai Lucien Lefranc,
F-93300 Aubervilliers Cedex (FR)**

(54) **Dépôt d'une couche d'oxyde d'étain sur un substrat.**

(57) L'invention concerne le revêtement de substrats notamment en verre par des composés organiques d'étain pyrolysables.

Elle propose d'employer comme poudre du dipropyl ditrifluoroacétate d'étain.

Elle permet de fabriquer des substrats revêtus de couches d'étain à caractéristiques électriques améliorées.

EP 0 103 511 A1

DEPOT D'UNE COUCHE D'OXYDE D'ETAIN SUR UN SUBSTRAT

La présente invention concerne le dépôt d'une couche d'oxyde d'étain sur la surface d'un substrat en verre, céramique, métal ou autres matières.

Plus précisément, elle porte sur une méthode de dépôt d'une couche d'oxyde d'étain par la mise en contact d'une poudre de composés organiques d'étain avec la surface d'un substrat en verre, céramique, métal ou autres matières, chauffé à une haute température. En général, la couche d'oxyde d'étain étant très dure, elle est utilisée largement pour éviter la détérioration de la surface des vaisselles, bouteilles, etc... Par ailleurs, il y a de nombreuses applications profitant du caractère semi-conducteur de la couche d'oxyde d'étain ; par exemple, des verres revêtus d'une telle couche sont largement employés comme conducteurs transparents tels qu'électrodes pour des cristaux liquides, verres anti-buée, etc... Egalement, des plaquettes céramiques fines revêtues d'une couche d'oxyde d'étain sont extrêmement employées en tant que pièces électriques. En plus, en profitant du caractère réflecteur des rayons infra-rouges de la couche d'oxyde d'étain, des verres ou tubes métalliques revêtus d'une couche d'oxyde d'étain sont utilisés comme couvercles ou tubes de capteurs solaires.

Il existe plusieurs méthodes pour déposer une couche d'oxyde d'étain sur la surface d'un substrat en verre, céramique, métal ou autres matières. Comme méthode appropriée pour la fabrication en série, depuis longtemps, on utilise la méthode consistant à pulvériser une solution de tétrachlorure d'étain sur la surface dudit substrat maintenu à haute température. Depuis quelques années, on utilise également la méthode dite "CVD" (Coating Vapor Deposition), consistant à mettre en contact la vapeur obtenue par chauffage et vaporisation de tétrachlorure d'étain ou de diméthyl dichlorure d'étain, avec un substrat en verre, céramique, métal ou autres matières, chauffé à haute température.

En plus, pour remplacer les méthodes précitées, on utilise également la méthode de dépôt consistant à projeter directement une poudre de composés organiques d'étain sur la surface du verre à haute température.

La méthode utilisant directement une poudre consiste à mettre en contact des composés organiques d'étain en poudre en suspension dans l'air ou dans d'autres gaz, avec la surface du verre à haute température. Comparée avec la méthode de pulvérisation de la solution ou la méthode CVD, cette méthode utilisant une poudre permet une meilleure efficacité car la vitesse de dépôt de la couche est plus grande.

Normalement, comme composés organiques d'étain, on utilise souvent l'oxyde de dibutyl étain $(C_4H_9)_2SnO$, désigné ci-après "DBTO". Dans un tel cas, pour améliorer la conductivité électrique des couches d'oxyde d'étain dans le courant de poudre en suspension, il est connu par la publication de brevet français n° 2 380 997 d'ajouter de l'acide fluorhydrique agissant comme dopant.

On a également proposé d'employer comme matériau de départ un mélange d'une poudre de composés organiques d'étain avec, comme dopant, du fluorure d'ammonium $(NH_4F)$ en poudre. Toutefois, malgré ces méthodes, la conductivité électrique reste insuffisante notamment pour réaliser des verres anti-buée de grande surface ou des électrodes en verre pour piles solaires.

La présente invention vise à améliorer la conductivité électrique de telles couches d'oxydes métalliques déposées notamment sur des substrats en verre.

Pour cela elle propose d'employer comme poudre à projeter sur le substrat porté à haute température, du dipropyl di-trifluoroacétate d'étain $(C_3H_7)_2Sn(CF_3COO)_2$. Avantageusement, la poudre est séchée jusqu'à une teneur en eau inférieure à 0,7 %, écrasée, et des particules d'une granulométrie moyenne de 3 à 40 microns sont sélectionnées.

Cette poudre est mise en suspension dans un courant gazeux à grande vitesse et dirigée sur le substrat à revêtir porté à une température supérieure à 350°C et de préférence de l'ordre de 500°C.

Dans un premier exemple, on a séché de la poudre de dipropyl di-trifluoroacétate d'étain dans un séchoir à air chaud jusqu'à une teneur en eau de 0,5 %. On a écrasé cette poudre à l'aide d'un broyeur jusqu'à une granulométrie comprise entre 8 et 25 microns, la granulométrie moyenne étant de 15 microns. Ensuite, on a chargé un pistolet de sablage avec la poudre ainsi préparée et en alimentant le pistolet avec de l'air sous pression (4 kg/cm$^2$) à débit de 100 l/min, on a projeté cette poudre sur la surface de plaquettes de verre de 15 cm x 15 cm, de 3 mm d'épaisseur, portées à une température de 577°C avec un débit de poudre de 16 g/min. En quatre secondes de projection on a obtenu une couche d'oxyde d'étain de 2200 Angstroems d'épaisseur.

On a ensuite mesuré la résistance électrique des couches d'oxyde d'étain obtenues et des caractéristiques optiques. La résistivité était de 6 x 10$^{-4}$ ohms.cm et le taux de réflexion du rayonnement infra-rouge (8 microns) était de 76 %.

Dans un second exemple, on a séché de la poudre de DBTO jusqu'à une teneur en eau de 0,4 % dans le même séchoir et on l'a broyée jusqu'à une granulométrie répartie entre 3 et 30 microns (granulométrie moyenne 14 microns). On a ensuite projeté cette poudre en suspension dans un courant d'air sous pression contenant de l'acide fluorhydrique à l'aide du pistolet de sablage déjà utilisé dans l'exemple précédent, sur la surface de plaques de verre portées à une température de 575 à 580°C.

Pour améliorer les caractéristiques électriques des couches d'oxyde d'étain on a dosé la quantité d'acide flyorhydrique de façon à obtenir un rapport molaire fluor/étain de l'ordre de 6.

Avec un débit de poudre de DBTO de 12 g/min on a obtenu une couche de 2200 Angstroems d'épaisseur après 3 secondes de projection.

Les plaques de verre étaient les mêmes que précédemment soit 15 cm x 15 cm et 3 mm d'épaisseur et dans le pistolet de sablage la même pression et le même débit d'air étaient employés.

La résistivité électrique des couches a été mesurée à 1 x 10$^{-3}$ ohms.cm et le taux de reflexion du rayonnement infra-rouge était de 69 %.

On constate donc que les caractéristiques électriques des couches d'oxyde d'étain obtenues à partir d'une poudre de dipropyl ditrifluoroacétate d'étain sont améliorées. La réflexion du rayonnement infra-rouge est également très améliorée.

- 1 -

REVENDICATIONS

1. Procédé de dépôt d'une couche d'oxyde d'étain sur un substrat notamment en verre, dans lequel on projette sur ledit substrat porté à haute température une poudre de composés organiques d'étain décomposables à la chaleur, caractérisé en ce qu'on utilise comme composés organiques d'étain du dipropyl di-trifluoroacétate d'étain.

2. Procédé selon la revendication 1, caractérisé en ce que la granulométrie de la poudre est comprise entre 3 et 40 microns.

3. Procédé selon la revendication 1, caractérisé en ce que la granulométrie moyenne est de l'ordre de 15 microns.

4. Procédé selon l'une des revendications précédentes, caractérisé en ce que la poudre est séchée jusqu'à une teneur en eau maximum de l'ordre de 0,7 %.

Office européen
des brevets

**RAPPORT DE RECHERCHE EUROPEENNE**

Numéro de la demande

EP  83 40 1734

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| X | EP-A-0 039 256  (SAINT-GOBAIN VITRAGE) <br> * Revendications 1,3,7; page 2, lignes 18-24; exemple 4 * | 1-3 | C 03 C  17/23 <br> C 04 B  41/06 <br> C 23 C  17/00 |
| A | US-A-4 172 159  (J. MARCAULT) <br> * Revendication 1; colonne 2, lignes 50-53 * | 1-3 | |
| A | CHEMICAL ABSTRACTS, vol. 95, no. 15, 12 octobre 1981, page 690, no. 133055e, Columbus, Ohio, US ANJU MIDHA et al.: "Some new organotin(IV) trifluoroacetates" & INDIAN J. CHEM., SECT. A 1981, 20A(6), 627-8 * Abrégé * | 1 | |
| | | | DOMAINES TECHNIQUES RECHERCHES (Int. Cl. ³) <br><br> C 03 C  17/00 |
| | Le présent rapport de recherche a été établi pour toutes les revendications | | |

| Lieu de la recherche | Date d'achèvement de la recherche | | Examinateur |
|---|---|---|---|
| LA HAYE | 21-11-1983 | GAJ A. | |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03 82